# EUROPEAN PATENT SPECIFICATION

(11) **EP 2 207 376 B1**
(45) Date of publication and mention of the grant of the patent: **08.01.2014**
(21) Application number: 09305028.4
(22) Date of filing: 12.01.2009
(51) Int. Cl.: H04W 16/04

(54) **A method for allocating radio resources between base stations sharing the same frequency bandwidth, in a wireless cellular network**
Verfahren zur Zuweisung von Funkressourcen zwischen Basisstationen mit gemeinsam benutzter Frequenzbandbreite in einem drahtlosen zellularen Netzwerk
Procédé d'affectation de ressources radio entre des stations de base partageant la même bande passante de fréquences, dans un réseau cellulaire sans fil

(43) Date of publication of application: 14.07.2010
(73) Proprietor: Alcatel Lucent, 75007 Paris (FR)
(72) Inventor: Bousquet, Thierry, 92140 Clamart (FR); Leclerc, Brice, 91290 Arpajon (FR); Libchaber, Jacques, 75013 Paris (FR)
(74) Representative: Therias, Philippe

(56) References cited:
- EP-A- 1 037 484
- EP-A- 1 641 295
- WO-A-2008/066214

## Description

The technical domain of the invention is wireless cellular broadband communication networks.

More particularly, the invention concerns a method for allocating radio resources between base stations sharing the same frequency bandwidth, in a wireless cellular network.

A wireless network comprises a plurality of cells, parting a covered area. In each cell a base station manages the radio emissions and transmissions with mobile sets located in said cell. Two problems occur in a wireless network when trying to broaden the throughput.

First, in order to increase radio coverage in dense urban areas for broadband network, a wireless infrastructure comprising many base stations covering small ranges is used. In current systems, power emission of each base station is tuned (that is reduced) in order to avoid or at least reduce interferences with neighboring base stations.

So doing, the number of bits that may be transmitted per time block is not maximal, due to remaining interferences and to the necessary reduction of power emission. Consequently throughput is not maximal on a large part of each cell. The burden caused by interferences can be measured by a Carrier over Interference Noise Ratio (CINR). Said CINR ratio decreases when either power emission is reduced or when interferences are present.

Different radio modulation schemes may be used to communicate between a base station and a mobile set. The base station and the mobile set periodically negotiate said modulation scheme in order to select the most performing scheme possible according to the quality of the radio communication. Modulation schemes, BPSK, QPSK, 16QAM or even 64QAM may be used. These schemes are here above ordered by increasing performances. A more performing scheme can carry more data bits but also needs a higher CINR. For example, a CINR of 20dB would allow a 64QAM scheme permitting a transmission of 6 bits per time block, when a CINR of 7dB would only allow a BPSK scheme and a transmission of 1 bit per time block. A CINR of less than 7dB is considered unable to transmit any data bit and corresponds to a hole in the network coverage.

It then appears difficult to increase the CINR, since an increase in power emission increases at the same time the overlapping area between neighboring cells and then the interferences.

Second, for a base station, the cost of ownership and power supply is high. Unfortunately, in dense urban area, a lot of base stations are needed in order to achieve broadband radio coverage. Operators want to reduce these costs while ensuring the broadband services everywhere in the urban area.

A first target of the invention is to organize cells and to allocate radio resources so as to maximize CINR distribution on the whole cell in dense urban area.

A second target of the invention is to reduce the wireless network total cost of ownership while ensuring broadband services in dense urban areas.

Several prior art solutions exist that try to optimize the use of radio resources in broadband wireless cellular networks.

A first prior art approach uses Time Division Multiple Access, TDMA, or Dynamic TDMA. TDMA shares the radio medium between several users. The same frequency channel is divided into different time slots. The users transmit in rapid succession, one after the other, each using his own time slot. This allows multiple stations to share the same radio frequency channel. The drawbacks are:
- bandwidth is split between cells. Then bandwidth is not optimally used if all cells are not equally loaded,
- a mobile set has to manage inter-frequency handovers: it has to scan neighbor frequency list and to dedicate resources to it,
- some time slots are wasted because of propagation delay constraints.

Another prior art approach is Universal Mobile Telecommunications System, UMTS. UMTS uses Time Division Duplex, TDD, or Frequency division Duplex, FDD. UMTS-TDD uses increments of 5MHz of spectrum, with each slice divided into 10ms frames containing fifteen time slots (1500 per second). The time slots are allocated in fixed percentage for downlink and uplink. Code Division Multiple Access, CDMA, is used within each time slot to multiplex streams from or to multiple transceivers. In FDD, the transmitter and receiver operates at different carrier frequencies. The drawbacks are:
- bandwidth is split between cells. Then bandwidth is not optimally used while all cells are not equally loaded,
- spreading codes are statically allocated,
- a mobile sets has to manage inter-frequency handovers: it has to scan neighbor scrambling codes list and to dedicate resources to it.

Another prior art approach is the use of remote antennas units. The drawbacks are that interferences between main antenna and remote antennas are not managed on this physical layered solution.

Another prior art approach is the instantiation proposed by the WIMAX forum based on scalable orthogonal frequency division multiple access, S-OFDMA. This technology is frequency reuse driven, with a Nc x Ns x Nf combining model, where Nc is the number of different carriers in the network, Ns is the number of different sectors per site, Nf is the number of different segments in the channel bandwidth (e.g. fractional frequency reuse). The drawbacks are:
- this instantiation doesn't take into account space time reuse,
- this instantiation does not support automatic distribution of the permutation zones between spatial sectors.

Another prior art approach is Spatial Division Multiple Access, SDMA. This technique, combined with multiple-input and multiple-output, MIMO, and single-input and single-output, SISO, improves significantly downlink communication. MIMO system uses multiple antennas at both the transmitter and receiver to improve communication performance. The system calculates spatial transfer function between mobile station and base station whose mobile set is attached to. The drawbacks are:
- this technique is not efficient from a power supply point of view, as 90% of power is consumed by the multiple-input/ multiple-output radio signal processing filters,
- uplink users can not be filtered by signal processing spatial filtering because they have been attached on neighbor base stations. SDMA system does not know the interferences transfer function from users that have been attached on another base station.

Another prior art approach is MERU Wifi. The Meru Wifi controller product defines virtual cells. A virtual cell is defined as all base stations in the area. The controller share bandwidth between mobiles sets by splitting time in the area. The drawback:
- changing frequency leads to the same problem as TDMA on the user mobile set,
- time is not dynamically allocated between base stations. Then bandwidth is not optimally used because all base stations are not equally loaded. So QoS is not managed in space dimension demand. QoS is not managed to deliver all services. The controller guarantees to every users, as far as it can, to have the medium every 20ms. This is only voice quality oriented.

A method for allocating radio resources between base stations of a wireless cellular network sharing the same frequency bandwidth is known from document EP-A 1 641 295. Thanks to the method, only one base station in a set of eight neighbouring base stations BS1-BS7 is able to use the frequency band in a given time slot, and the base stations which can use the frequency band at the same time are base stations which are not part of the same set of eight neighbouring base stations. To this aim, a negotiation is made between base stations of the same set of eight neighbouring base stations in order to decide to which single base station of the set will be allocated the time slot. This method fails however to provide guaranty that each base station of a set will be able to use the frequency band periodically.

The present invention addresses and solves these problems in a very convenient way.

The object of the invention is a method for allocating radio resources between base stations sharing the same frequency bandwidth, according to claim 1.

According to another feature of the invention, the base stations pertaining to a set of neighbouring base stations of different token share a data frame.

According to another feature of the invention the number of tokens N is less than or equal to 7.

According to another feature of the invention, N is dynamically optimized according to the network topology.

According to another feature of the invention N is automatically determined by trial and error and negotiated between base stations.

According to another feature of the invention, N is set equal to a maximum value Nmax for all base stations at start and progressively decreased until an optimal value is reached.

According to another feature of the invention, N is set equal to a minimum value Nmin for all base stations at start and progressively increased until an optimal value is reached.

According to another feature of the invention, the network is a WIMAX network using a scalable orthogonal frequency division multiple access, S-OFDMA, modulation scheme.

Another object of the invention is a base station able to cope with neighbouring base stations according to said method.

Another object of the invention is a network comprising base stations according to previous embodiment, said base stations being deployed following a pattern as regular as possible.

According to another feature of the invention, the distance between two neighbour base stations is less than 100 m.

According to another feature of the invention, the network is a WIMAX network using a scalable orthogonal frequency division multiple access, S-OFDMA, modulation scheme.

Others features, details and advantages of the invention will become more apparent from the detailed illustrating description given hereafter with respect to the drawings on which:
- figures 1-3, 5 are plan views of a network area covered by cells
- figure 4 shows a time diagram illustrating the parting of a time block into tokens,
- figure 6 is a diagram of coverage vs. CINR.

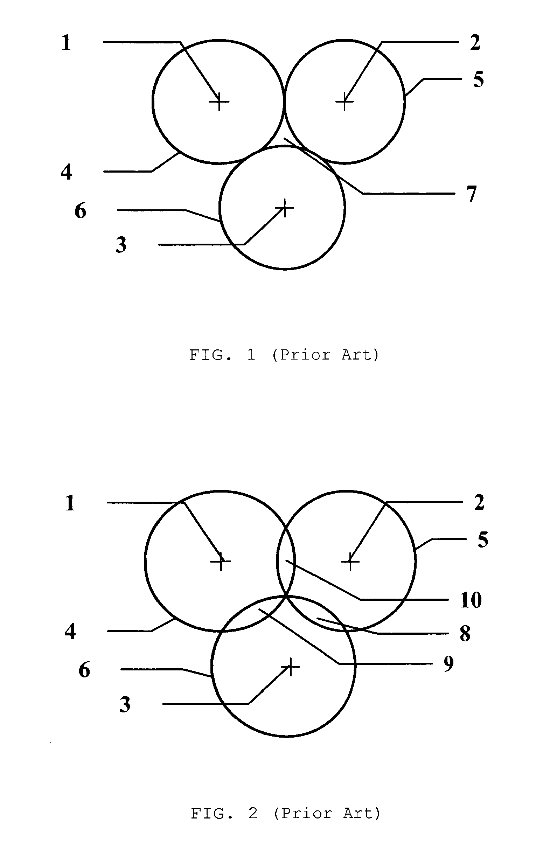

As illustrated on figures 1 and 2, a cellular network tries to cover a given area with base stations 1, 2, 3, managing radio communications with mobile sets in a sector around said base station 1, 2, 3. Said sector covered by a base station is called a cell. Said sector is here figured by a circle around said base station 1, 2, 3. Base stations 1, 2, 3, are spread/deployed over an area to cover, following a pattern as regular as possible. Thus base stations are ideally located according to a triangular/hexagonal network pattern. All base stations 1, 2, 3, use the same frequency bandwidth. Around each base station 1, 2, 3, is figured the respective range 4, 5, 6, of said base station. At the centre of the circle the emission power and thus the CINR is maximum, while on the periphery of the circle the CINR equal 0dB. When the range 4 of a base station 1 overlaps the range 5 of its neighbour 2, interferences occur. In prior art systems the power emission is tuned for each base station 1, 2, 3, in order to reduce said interferences. Ranges 4, 5, 6 may be adjusted by reducing power emission in order to not overlap as figured in figure 1. This leads to a dead zone 7 also called a hole in the coverage. Ranges 4, 5, 6 may be reduced in order not to create a dead zone 7, as figured in figure 2, but this leads to interferences in overlapping zones 8, 9, 10.

Moreover, since power emission decreases from the centre of range to the circle, the smaller is the circle diameter, the smaller the power emission would be. The reduction of power emission to avoid interferences then also reduces the average power emission and thus the CINR.

The main idea of the invention is to part the time into non overlapping tokens and to allocate a different token to each of neighbor base stations 1, 2, 3, so that, each base station 1, 2, 3, can use the radio media, that is the common frequency bandwidth, during its allocated token, one after the other. Out off its allocated token a base station remains silent. So doing, during a given token only one base station in a given neighboring is using the radio media. Accordingly, no interferences can occur in said neighboring. Such a parting of time is periodically repeated during each time block.

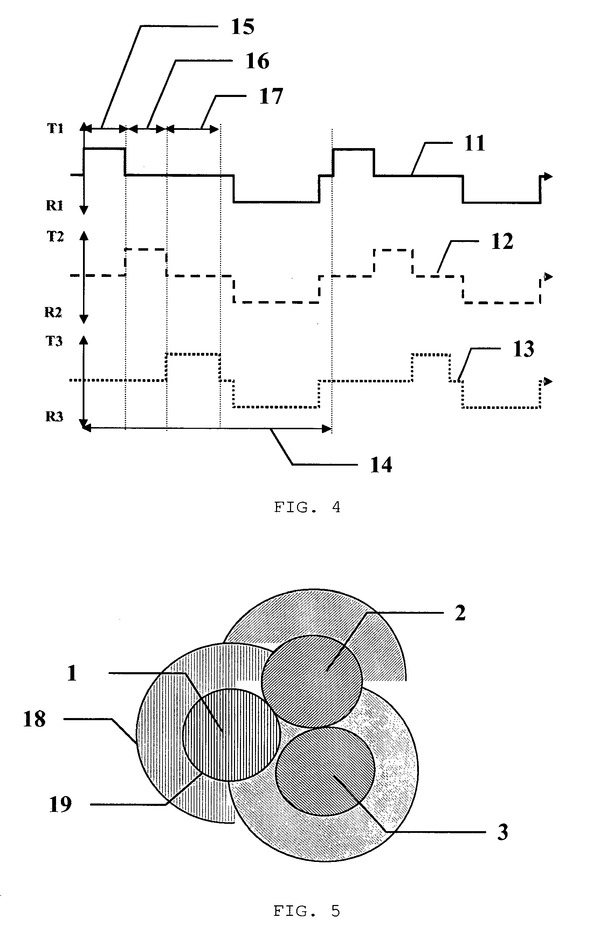

Figure 4 illustrates an example by way of time diagrams. Three diagrams are figured representing from top to down the respective allocation of the commonly used frequency bandwidth to base station 1, 2, 3, where Ti figures the allocation to the transmitter of base station i and Ri figures the allocation to the receiver of base station i. Here the time block 14 is parted in order to create three tokens 15, 16, 17, since a neighboring of three cells/base stations 1, 2, 3, is considered. It can be seen that the tokens are not overlapping with one another or with any other allocation. It may be noted that not necessary the whole time block 14 is used to provide tokens. Here e.g. the end of the time block 14 is dedicated to receptors Ri, and all receptors are listening at the same time. Here the time parting is only used for transmitting, that is for the downlink, DL, direction.

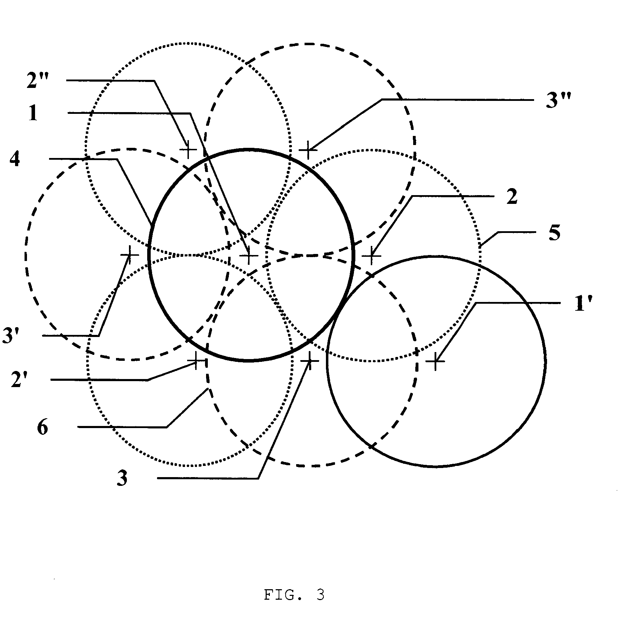

Now referring to figure 3, figuring the same illustrative example featuring base stations 1, 2, 3, with the same scale, as represented at figures 1 or 2, one advantage of the invention can be seen. Since base station 1 is never transmitting at the same time as base stations 2 or 3, no interferences has to be feared between base station 1 and 2 or 1 and 3. All base stations neighbour to base station 1 are advantageously transmitting during different tokens, token 2 for base stations 2, 2', 2" and token 3 for base stations 3, 3', 3". The power emission of said base station 1 can then be raised without risking interferences with its direct neighbours. The only limitation arises when the increased range 6 of base station 1 tends to overlap another base station using the same token 1, for instance base station 1'. This leads here, with the given example using three tokens, to an increased range of a factor 2. Said increase in range comes with a corresponding increase in CINR.

This leads to an increase in power consumption, but this increase only occurs for the duration of the token. It then results in a global decrease of the whole power consumption and of the cost.

Figure 5 illustrates the improvement to the coverage that may be obtained by the invention. Three base stations 1, 2, 3, are displayed, each with a different token figured by a different type of hatching. The time reuse factor (or the number N of different tokens) is 3. A Dmin small-circle 19 represents the coverage area of one base station 1 at 20dB CINR. A Dmax big-circle 18 represents coverage area of this base station 1 at 0dB CINR level. 0dB CiNR level is considered as interference limit for one base station 1. A ratio Dmax/Dmin=2 can be observed with N=3 that raises to Dmax/Dmin=3 with N=4.

Moreover, in term of coverage, all base stations in a neighbouring set contribute. Consequently no hole can appear in the area covered by the three base stations 1, 2, 3. Consequently, same token base stations, e.g. base stations 1, 1' that share the first token 15, do not need to have overlapping ranges to avoid holes. It results from the preceding that according to the invention interferences can ideally be completely avoided or at least drastically reduced.

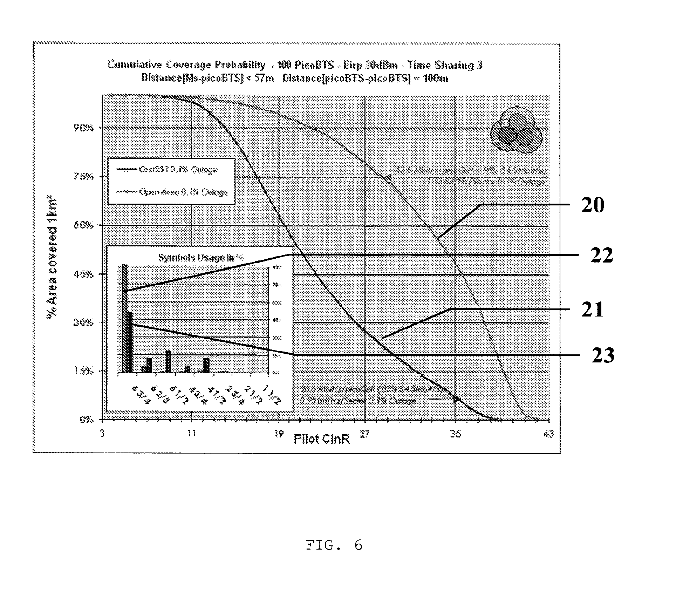

With reference to figure 6 is figured two curves figuring percentage of relative covered area as a function of CINR with two corresponding histograms. All data are computed based on a Cost231-HATA propagation model.

Curve 21 represents the percentage of covered area as a function of CINR with a first propagation model. 62% of the area has a CINR > 19dB. Histogram 23 represents the percentage of the area covered by the same symbol coding. 45% of the area is covered with 6 ¾ symbol coding.

Curve 20 is analogous to the curve 21 with a different propagation model (Open Area model). Histogram 22 is analogous to the histogram 23 with a different propagation model (Open Area model)

According to another important feature of the invention, the base stations 1, 2, 3, pertaining to a set of neighbouring base stations of different token dynamically negotiate the relative width of their tokens.

The set of neighbouring base stations of different token comprises N, N=3 in the example, base stations, e.g. base stations 1, 2, 3 in the example, that are direct (or closest) neighbours, each of which being allocated a different token among N tokens, e.g. respectively tokens 15, 16, 17, in the example. Such a set may conveniently be called a virtual cell, since it acts as a prior art cell in many way.

In order to balance the load between the several base stations 1, 2, 3 of a virtual cell, said base stations 1, 2, 3, regularly exchange information by any communication means or protocol, in order to reach a deal. A currently more loaded base station would, for instance, ask for more radio resources, that is bandwidth, allocation obtained by a broadening of its token. Said broadening may e.g. be obtained from the shrinkage of the token of at least one other lesser loaded base station. Such negotiation may be done permanently or periodically in order to adapt the load sharing between base stations of a virtual cell to better conform to the needs as expressed by the demands of the mobile sets located in the respective ranges of each said base station.

It appears from the figure 3, that a virtual cell is a variable feature. For instance, base station 1 pertains to the virtual cell composed of base stations 1, 2, 3, and negotiates with said bases stations 2 and 3. But base station 1 may also pertains to the virtual cell composed of base stations 1, 2', 3', in order to negotiate with neighbouring bases stations 2' and 3'.

So doing, relative widths of tokens determined locally out off negotiations between neighbour base stations, can be spread all over the network, step by step.

A virtual cell is also a useful association when it comes to transmit a frame. Since all base stations of a given virtual cell, by way of tokens, share a time block 14, the concatenation of all the bits transmitted by the base stations of said virtual cell among the several complementary tokens can be merged into one digital frame for travel across the network. For example in WIMAX network a frame is transmitted during each time block. Such a frame is then shared between the base stations of a virtual cell. In such a WIMAX network the time block 14 lasts 5ms.

The number N of tokens is an important parameter to determine in order to optimize the global use of radio resources in the network. When N increases, the size of a neighbouring set of base station or virtual cell also increases. The distance from a base station, for example 1, to the closest base station with the same token 15, that is base station 1', also increases, thus reducing the risk of interferences and increasing the CINR. But in the same time the parting of the time block 14 to form an increased number of tokens leads to a reduction of the radio resources / bandwidth allocated to each base station. The optimal N is then difficult to accurately determine.

In an ideally regularly spread network where base stations 1, 2, 3, are hexagonally disposed across an area, a base station can not have more that six neighbours. Thus theoretically, no advantage can be expected from a number of tokens greater than 7.

Simulations show that an ideally regularly spread network benefits from an optimal token number N = 3 or N = 4. That is, practically, a token number of 5 or more does not improve the global CINR as much as it penalises it by increasing division of the time block that decrease the width of each token 15, 16, 17.

To cope with a particular topology of the network that depart from an ideally regularly spread network, the number N may be decreased. For example a number N = 2 may be optimal for a network showing a linear topology, that is where base stations are disposed along a line, corresponding for instance to the infrastructure of a tunnel, a motorway or a railway.

Such a determination of the number N can be done statically, one time, i.e. when installing the network. This may be suited to a network whose topology does not evolve to much. Said determination can also, advantageously be done dynamically, in order to take into account an ever possible change in network topology: addition of a base station, removal or failure of a base station.

There is different ways to optimize said number N of tokens. A first method is global in that it is managed by a global controller that can discuss with all the base stations among the network. Knowing the states of all bases stations and their respective locations, said global controller can determine the optimal N, using a known global simulation method.

Number N can also be determined dynamically, for instance when at least one state of a base station changes, for example when said base station encounters a failure.

Another way is to optimize said number N of tokens, without the use of a global controller, but just step by step, negotiating between neighbouring base stations. Such an optimization can be done for instance by negotiations between base stations combined with a trial and error method.

Two approaches, an increasing one and a decreasing one may be applied. In the decreasing approach, the method start using N=Nmax (that is Nmax=7, or taking into account previous simulation results Nmax=5 or Nmax=4) for all base stations. By way of step by step negotiations between neighbour base stations, each base station is allocated a token. The network can thus reach a functioning state. A network global performance is then determined out off performance measures in order to qualify said state corresponding to N=Nmax. Said performance measures may comprise: bit error rates (BER), CINR estimations, interference estimations based either on network topology or on power emission levels obtained by auto-adjustment, or rate of coverage. The same step in then iterated with Nmax=Nmax-1 while the resulting network global performance improves.

In the increasing approach, the method start using N=Nmin (that is Nmin=1, or better Nmin= 2) for all base stations. By way of negotiations between neighbour base stations, each base station is allocated a token, and a functioning state can be reached. A network global performance is then determined. The same step in then iterated with Nmin=Nmin+1 while the resulting network global performance improves.

Said method is particularly targeted to wireless networks using the Scalable-Orthogonal Frequency Division Multiple Access, S-OFDMA, radio access technology.

The method necessitates at least amendment of base stations to be able to apply said method, and for instance to be able to cope with neighbouring base stations during negotiation steps.

Then, the method may either be applied to upgrade existing base stations or may also preferentially be applied to a new network.

A particular embodiment of the invention may be applied to the densification of a hot zone, i.e. a zone where a high density of users/mobile sets are asking for frequent numerous broadband services, e.g. a dense urban area. In addition to an existing primary base cellular network comprising macro base stations, a secondary network may be deployed. Said secondary network must use a different frequency bandwidth from the one used by the existing primary network. Coverage in the served area is improved thanks to said secondary network comprising high density of base stations according to the invention, also called micro or pico base stations. Said micro or pico base stations offer smaller ranges but are much more numerous compared to macro base stations.

Such a secondary network is advantageously organized following a regular pattern. The distance between two neighbours such micro or pico base stations is typically less than 100 m. Thus a 1km² zone needs at least 100 such micro or pico base stations. This greatly improves the CINR in said high density zone. Thanks to high CINR, high throughput modulation, such as e.g. 64 QAM may be used on a large part of the zone (more than 75% of the footprint).

Such a network may provide a minimum throughput of 1Gbps/km² in wireless to share between the users concentrated in said high density zone. This is to be compared with the prior art performance that never tops a 35 Mbits/km² limit.

## Claims

1. A method for allocating radio resources between base stations (1, 2, 3) sharing the same frequency bandwidth, in a wireless cellular network, comprising the step of defining a pattern of N neighbouring base stations (1, 2, 3) using said same frequency bandwidth, said pattern being repeated through said network **characterized by** the fact that said method further comprises the steps of:
- allocating a periodic time block (14) within which said N neighbouring base stations transmit downlink signals and receive uplink signals;
- parting said time block into a number N of non overlapping time tokens (15, 16, 17),
- and allocating a different time token (15, 16, 17) to each neighbouring base station (1, 2, 3) of said pattern so that neighbouring base stations of said pattern successively transmit downlink signals during their allocated time token.

2. The method of claim 1, where the base stations (1, 2, 3) of said pattern dynamically negotiate the relative width of their time tokens (15, 16, 17).

3. The method of claim 1 or 2, where the base stations (1, 2, 3) of said pattern share a data frame.

4. The method of any one of claims 1 to 3, where the number N is less than or equal to 7.

5. The method of any one of claims 1 to 4, where the number N is dynamically optimized.

6. The method of any one of claims 1 to 5, where the number N is automatically determined by trial and error and negotiated between neighbouring base stations (1, 2, 3) of said pattern.

7. The method of claim 6, where the number N is set equal to a maximum value Nmax for all base stations (1, 2, 3) at start and progressively decreased until an optimal value is reached.

8. The method of claim 6, where the number N is set equal to a minimum value Nmin for all base stations (1, 2, 3) at start and progressively increased until an optimal value is reached.

9. The method of any one of claims 1 to 8, where the network is a WIMAX network using a scalable orthogonal frequency division multiple access, S-OFDMA, modulation scheme.

10. The method of any one of claims 1 to 9, where the end of periodic time block (14) is dedicated to the reception so that the neighbouring stations of said pattern are listening at the same time.

11. A base station (1, 2, 3) including means adapted to implement the steps according to the method of any one of claims 1 to 10.

12. A network **characterized in that** it comprises base stations (1, 2, 3) according to claim 11 and **in that** said base stations (1, 2, 3) are deployed following a regular pattern.

13. The network of claim 12 where the distance between two neighbouring base stations (1, 2, 3) is less than 100 m.

14. The network of claim 11 or 12 being a WIMAX network using a scalable orthogonal frequency division multiple access, S-OFDMA, modulation scheme.

## Patentansprüche

1. Verfahren zur Zuteilung von Funkressourcen zwischen Basisstationen (1, 2, 3), die sich dieselben Frequenzbandbreiten teilen, in einen drahtlosen zellularen Netzwerk, umfassend den Schritt des Definierens eines Musters von N benachbarten Basisstationen (1, 2, 3), welche dieselben Frequenzbandbreiten benutzen, wobei das besagte Muster über das besagte Netzwerk hinweg wiederholt wird, **dadurch gekennzeichnet, dass** das besagte Verfahren weiterhin die folgenden Schritte umfasst:
- Zuteilen eines periodischen Zeitblocks (14), innerhalb welchem die besagten N benachbarten Basisstationen Downlink-Signale übertragen und Uplink-Signale empfanden;
- Teilen des besagten Zeitblocks in eine Anzahl N von sich nicht überlappenden Zeit-Tokens (15, 16, 17),
- und Zuteilen eines unterschiedlichen Zeit-Tokens (15, 16, 17) an jede benachbarte Basisstation (1, 2, 3) des besagten Musters, so dass die besagten benachbarten Basisstationen des besagten Musters während ihres zugeteilten Zeit-Tokens nacheinander Downlink-Signale übertragen.

2. Verfahren nach Anspruch 1, wobei die Basisstationen (1, 2, 3) des besagten Musters die relative Breite ihrer Zeit-Tokens (15, 16, 17) dynamisch aushandeln.

3. Verfahren nach Anspruch 1 oder 2, wobei sich die Basisstationen (1, 2, 3) des besagten Musters einen Datenrahmen teilen.

4. Verfahren nach einem beliebigen der Ansprüche 1 bis 3, wobei die Anzahl N niedriger als oder gleich 7 ist.

5. Verfahren nach einem beliebigen der Ansprüche 1 bis 4, wobei die Anzahl N dynamisch optimiert wird.

6. Verfahren nach einem beliebigen der Ansprüche 1 bis 5, wobei die Anzahl N automatisch nach dem Versuch-und-Irrtum-Prinzip ermittelt und zwischen benachbarten Basisstationen (1, 2, 3) des besagten Musters verhandelt wird.

7. Verfahren nach Anspruch 6, wobei die Anzahl N für alle Basisstationen (1, 2, 3) zu Beginn auf einen maximalen Wert Nmax eingestellt und anschließend bis Erreichen eines optimalen Wertes schrittweise gesenkt wird.

8. Verfahren nach Anspruch 6, wobei die Anzahl N für alle Basisstationen (1, 2, 3) zu Beginn auf einen minimalen Wert Nmin eingestellt und anschließend bis Erreichen eines optimalen Wertes schrittweise erhöht wird.

9. Verfahren nach einem beliebigen der Ansprüche 1 bis 8, wobei das Netzwerk ein WIMAX-Netzwerk ist, welches ein skalierbares orthogonales Frequenzmultiplex-Mehrfachzugriffs- bzw. S-OFDMA-Modulationsschema anwendet.

10. Verfahren nach einem beliebigen der Anspräche 1 bis 9, wobei das Ende des periodischen Zeitblocks (14) für den Empfang bestimmt ist, so dass die benachbarten Stationen des besagten Musters gleichzeitig empfangsbereit sind.

11. Basisstation (1, 2, 3) mit Mitteln, welche dafür ausgelegt sind, die Schritte des Verfahrens gemäß einem beliebigen der Anspruche 1 bis 10 durchzuführen.

12. Netzwerk, **dadurch gekennzeichnet, dass** es eine Basisstation (1, 2, 3) gemäß Anspruch 11 umfasst, und dass die besagten Basisstationen (1, 2, 3) gemäß einem regelmäßigen Muster angeordnet sind.

13. Netzwerk nach Anspruch 12, wobei die Entfernung zwischen zwei benachbarten Basisstationen (1, 2, 3) weniger als 100 m beträgt.

14. Netzwerk nach Anspruch 11 oder 12, wobei das Netzwerk ein WIMAX-Netzwerk ist, welches ein skalierbares orthogonales Frequenzmultiplex-Mehrfachzugriffs- bzw. S-OFDMA-Modulationsschema anwendet.

## Revendications

1. Procédé d'allocation de ressources radio entre des stations de base (1, 2, 3) partageant la même largeur de bande de fréquence, dans un réseau cellulaire sans fil, comprenant l'étape de définition d'une configuration de N stations de base voisines (1, 2, 3) en utilisant la même largeur de bande de fréquence, ladite configuration étant répétée par ledit réseau **caractérisé par le fait que** ledit procédé comprend en outre les étapes suivantes :
- allouer un bloc temporel périodique (14) dans lequel lesdites N stations de base voisines transmettent des signaux de liaison descendante et reçoivent des signaux de liaison montante ;
- diviser ledit bloc temporel en un nombre N de jetons temporels ne se chevauchent pas (15, 16, 17),
- et allouer un jeton temporel différent (15, 16, 17) à chaque station de base voisine (1, 2, 3) de ladite configuration de sorte que les stations de base voisines de ladite configuration transmettent successivement des signaux de liaison descendante durant leur jeton temporel alloué.

2. Procédé selon la revendication 1, dans lequel les stations de base (1, 2, 3) de ladite configuration négocient dynamiquement la largeur relative de leurs jetons temporels (15, 16, 17).

3. Procédé selon la revendication 1 ou 2, dans lequel les stations de base (1, 2, 3) de ladite configuration partagent une trame de données.

4. Procédé selon l'une quelconque des revendications 1 à 3, dans lequel le nombre N est inférieur ou égal à 7.

5. Procédé selon l'une quelconque des revendications 1 à 4, dans lequel le nombre N est optimisé de marnière dynamique.

6. Procédé selon l'une quelconque des revendications 1 à 5, dans lequel le nombre N est déterminé automatiquement par essais et erreurs et négocié entre des stations de base voisinés (1, 2, 3) de ladite configuration.

7. Procédé selon la revendication 6, dans lequel le nombre N est défini comme étant égal à une valeur maximum Nmax pour toutes les stations de base (1, 2, 3) au début puis est diminué progressivement jusqu'à ce qu'une valeur optimale soit obtenue.

8. Procédé selon la revendication 6, dans lequel le nombre N est défini comme étant égal à une valeur minimum Nmin pour toutes les stations de base (1, 2, 3) au début puis est augmenté progressivement jusqu'à ce qu'une valeur optimale soit obtenue.

9. Procédé selon l'une quelconque des revendications 1 à 8, dans lequel le réseau est un réseau WIMAX utilisant une configuration de modulation d'accès multiple adoptif par répartition orthogonale de la fréquence, S-OFDMA.

10. Procédé selon l'une quelconque des revendications 1 à 9, dans lequel la fin du bloc temporel périodique (14) est dédiée à la déception de sorte que les stations voisines de ladite configuration écoutent simultanément.

11. Station de base (1, 2, 3) comprenant des moyens adaptés pour mettre en oeuvre les étapes conformément au procédé selon l'une quelconque des revendications 1 à 10.

12. Réseau **caractérisé en ce qu'**il comprend des stations de base (1, 2, 3) selon la revendication 11 et **en ce que** lesdites stations de base (1, 2, 3) sont déployées conformément à une configuration régulière.

13. Réseau selon la revendication 12 dans lequel la distance entre deux stations de base voisines (1, 2, 3) est inférieure à 100 m.

14. Réseau selon la revendication 11 ou 12 étant un réseau WIMAX utilisant une configuration de modulation d'accès Multiple adaptif par répartition orthogonale de la fréquence, S-OFDMA.
